# EUROPÄISCHE PATENTSCHRIFT

(11) **EP 4 454 110 B1**
(45) Veröffentlichungstag und Bekanntmachung des Hinweises auf die Patenterteilung: **11.03.2026**
(21) Anmeldenummer: 23716467.8
(22) Anmeldetag: 30.03.2023
(51) Int. Cl.: H02K 11/33

(54) **ELEKTROMOTOR**
ELECTRIC MOTOR
MOTEUR ÉLECTRIQUE

(30) Priorität: 26.04.2022 EP 22170036
(43) Veröffentlichungstag der Anmeldung: 30.10.2024
(73) Patentinhaber: Innomotics GmbH, 90441 Nürnberg (DE)
(72) Erfinder: BRÜTTING, Frank, 91054 Erlangen (DE)
(74) Vertreter: Michalski Hüttermann & Partner Patentanwälte mbB
(86) Internationale Anmeldenummer: PCT/EP2023/058318
(87) Internationale Veröffentlichungsnummer: WO 2023/208511

(56) Entgegenhaltungen:
- EP-A1- 3 719 975
- DE-A1- 102018 131 971
- DE-A1- 102020 117 267

## Beschreibung

Die Erfindung betrifft einen Elektromotor mit einer ständerseitigen Stabwicklung.

Elektromotoren können ständerseitig eine Stabwicklung aufweisen. Dabei weist der Ständer (Stator) eine Reihe von Stäben anstelle von gewickelten Drahtleitern als Feldleiter auf. Motoren dieser Bauart sind aus den Schriften EP 3719975 A1 und DE 10 2018 131 971 A1 bekannt. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Dieser hohe Stromfluss erfordert aber durch den geringen Widerstand der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehr Platinen angeordnet werden, die nahe am Elektromotor angeordnet werden. Die Stäbe können dabei direkt oder über elektrisch leitende stabartige Verbindungselemente direkt als mechanischer Träger der Platinen verwendet werden.

Zu der hohen Verlustwärme der elektrischen und elektronischen Komponenten, die durch die hohen Stromstärken bedingt ist, kommt also bei einem solchermaßen gestalteten Elektromotor eine hohe Packungsdichte der elektrischen und elektronischen Komponenten. Deren direkte Verbindung mit dem Stator/Rotor-Block über die Stäbe sorgt für einen weiteren Wärmeeintrag aus dem Stator/Rotor-Block. Daraus resultiert nachteilig ein erheblicher Kühlaufwand der elektrischen und elektronischen Komponenten auf den Platinen.

Es ist Aufgabe der Erfindung, einen Elektromotor anzugeben, der den eingangs genannten Nachteil vermindert.

Diese Aufgabe wird durch einen Elektromotor mit den in Anspruch 1 angegebenen Merkmalen gelöst.

Der erfindungsgemäße Elektromotor umfasst einen Stator mit einer Mehrzahl von als Stäbe ausgestalteten Feldleitern, sowie eine Mehrzahl von Wechselrichtern zur Ansteuerung der Feldleiter.

Dabei sind die Wechselrichter auf einer oder mehreren Leiterplatten angeordnet. Weiterhin sind die Leiterplatten auf wenigstens einer Kühlplatte angeordnet und die Kühlplatte derart angeordnet, dass die Feldleiter oder mit den Feldleitern elektrisch verbundene Stromleiter mit der Kühlplatte in mechanischer Wirkverbindung stehen, insbesondere sie durchdringen.

Schließlich ist wenigstens eine Kühlvorrichtung vorhanden, die eine Fluidleitung umfasst, die an einem oder mehreren der Feldleiter und/oder Stromleiter außen anliegend geführt ist.

Der erfindungsgemäße Elektromotor weist vorteilhaft durch die Fluidkühlung eine verbesserte Wärmeabfuhr für die Feldleiter auf. Dadurch erreicht ein geringerer Wärmestrom die Kühlplatten und die auf den Kühlplatten angeordnete Elektronik, insbesondere die Wechselrichter. Dadurch wiederum kann der Kühlaufwand im Bereich der Kühlplatten und der Elektronik reduziert werden.

Die Feldleiter oder Stromleiter agieren bevorzugt als mechanischer Träger für die Kühlplatten und stehen daher in mechanischer Wirkverbindung mit diesen. Es ist möglich, dass die Feldleiter oder Stromleiter die Kühlplatte und die Leiterplatte durchdringen.

Bei den als Stäbe ausgestalteten Feldleitern kann es sich neben massiven Stäben auch um solche handeln, die aus mehreren Teilleitern zusammengesetzt sind. Dabei können die Teilleiter parallelgeschaltet sein, wenn die Feldleiter beispielsweise Roebelleiter sind. Die Teilleiter können auch in Serie geschaltet sein und die Feldleiter aus mehreren Teilelementen bestehen, die beispielsweise per Schweiß-Verbindung aneinandergereiht sind.

Die Stromleiter können mechanisch fest an den Feldleitern angeordnet und mit ihnen verbunden sein, wobei stets genau ein Feldleiter mit genau einem Stromleiter verbunden ist, wobei die Stromleiter die Feldleiter axial verlängern. In diesem Fall können die Feldleiter, Stromleiter und Kühlplatte eine mechanisch starre Einheit bilden.

Vorteilhafte Ausgestaltungen des erfindungsgemäßen Elektromotors gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Die Fluidleitungen können Wasserleitungen sein. Wasser ist ein Standard-Kühlmittel und kann beispielsweise in einem Werk von außerhalb des Elektromotors zur Verfügung gestellt werden, sodass für Wasser geeignete Leitungen zweckmäßig sind.

Der Elektromotor kann eine Pumpe für ein Kühlfluid aufweisen. Sofern das Kühlfluid nicht von außen zugeführt wird, ist es vorteilhaft, wenn der Elektromotor so ausgestaltet ist, dass ein Fluid-Umlauf erzeugt werden kann, der für einen Wärmeabtransport durch Materialbewegung sorgt. Falls der Motor eine hohe Zahl von Feldleitern, beispielsweise mehr als 50 oder sogar mehr als 100 Feldleiter aufweisen, können auch mehrere Pumpen vorhanden sein.

In einer ersten erfindungsgemäßen Alternative ist der Elektromotor so gestaltet, dass an jedem der Feldleiter und/oder Stromleiter eine Fluidleitung geführt ist. Es ist zweckmäßig, für jeden der Feldleiter oder Stromleiter eine Entwärmung vorzusehen, da im Betrieb des Elektromotors die Feldleiter oder Stromleiter gleichmäßig mit Wärme beaufschlagt werden und somit jeder der Feldleiter oder Stromleiter in etwa gleichermaßen zum Wärmetransport zu den Kühlplatten beiträgt.

In dieser ersten erfindungsgemäßen Alternative liegt ein Bereich, in dem die Fluidleitung an dem Feldleiter und/oder Stromleiter außen anliegend geführt ist, axial zwischen einer Kühlplatte und einem axialen Beginn des Rotors. In diesem Bereich liegen die Feldleiter und/oder Stromleiter frei und die Fluidleitung kann unproblematisch angebracht werden. Weiterhin ist es zweckmäßig, in diesem Bereich die Wärme abzuführen, um den Wärmeeintrag aus dem Rotor-Bereich, also dem Antriebssystem in die Elektronik, also dem Bereich der Kühlplatten und Leiterplatten zu verringern.

Falls Stromleiter vorhanden sind, sind diese mit den Feldleitern zweckmäßig mittels eines Schuhs verbunden sind, wobei die Fluidleitung am Schuh entlanggeführt ist. Der Schuh dient der festen Verbindung zwischen den Feldleitern und den Stromleitern, wobei die Feldleiter zur Antriebsseite des Elektromotors gehören und die Stromleiter die Elektronik auf den Leiterplatten kontaktieren und die Kühlplatten und Leiterplatten tragen. Vorteilhaft kann der Schuh geometrisch an die Fluidleitung angepasst werden, ohne dass die Form oder der Querschnitt der Feldleiter verändert werden muss. Dadurch wird die Herstellung der Feldleiter vereinfacht. Alternativ kann die Fluidleitung an einem Feldleiter außen anliegend geführt sein.

Die Fluidleitungen für wenigstens zwei der Feldleiter oder Stromleiter können miteinander seriell verbunden sein. Mit anderen Worten führt eine einzelne Fluidleitung zu einem Feldleiter oder Stromleiter und dann in Folge zu wenigstens einem weiteren Feldleiter oder Stromleiter. Erst danach führt die Fluidleitung weg von den Feldleitern, beispielsweise zu einem Reservior. In dieser Weise werden mehrere der Feldleiter oder Stromleiter von einer einzelnen Fluidleitung entwärmt, was den Anschlussaufwand reduziert.

Die Fluidleitung umläuft in einer zweiten erfindungsgemäßen Alternative den Ring, den die Feldleiter oder die Stromleiter ausbilden, an seinem Außenrand oder innenliegend an seinem Innenrand. Mit anderen Worten erstreckt sich die Fluidleitung azimutal über wenigstens zwei der Feldleiter oder Stromleiter hinweg. Die Fluidleitung kann dabei einen vollständigen Ring ausbilden, also alle Feldleiter oder Stromleiter berühren oder aber nur einen Ringsektor ausbilden, bei dem die Fluidleitung einen Teil der Feldleiter oder Stromleiter überstreicht und somit deren Wärme abführt. Im letzteren Fall ist es zweckmäßig, mehrere solche Fluidleitungen zu verwenden, die zusammen alle Feldleiter oder Stromleiter überstreichen und somit entwärmen. Dafür ist es weiterhin zweckmäßig, eine Fluidleitung für ein Winkelsegment oder einen Anteil der Feldleiter oder Stromleiter zu verwenden, das einem Bruchteil des Vollkreises mit ganzzahligem Nenner entspricht, also 1/3, 1/4 oder 1/8 des Vollkreises. Beispielsweise könnten bei 72 Feldleitern 1/6 davon, also 12 von einer Fluidleitung entwärmt werden und sechs solche Fluidleitungen vorhanden sein. Jede der Fluidleitungen würde somit einen Winkel von 60° des Vollkreises abdecken.

In dieser zweiten erfindungsgemäßen Alternative ist die Fluidleitung an einer radial nach außen oder nach innen weisenden Seite der Feldleiter oder Stromleiter entlanggeführt und weist an einer azimutalen Seite der Feldleiter oder Stromleiter anliegende Oberflächenelemente auf. Die Oberflächenelemente vergrößern die Kontaktfläche zwischen der Fluidleitung und dem Feldleiter oder Stromleiter und sorgen damit für eine bessere Wärmeübertragung vom Feldleiter oder Stromleiter an das Fluid. Sind die Fluidleitungen an einer radial außenliegenden Seite der Feldleiter oder Stromleiter entlanggeführt, weist das Oberflächenelement zweckmäßig radial nach innen und umgekehrt. Das Oberflächenelement kann dabei U-förmig gestaltet sein und somit neben einem besseren thermischen Kontakt auch für einen mechanischen Halt der Fluidleitung sorgen.

In der ersten erfindungsgemäßen Alternative verläuft die Fluidleitung wenigstens abschnittsweise parallel zu dem Feldleiter oder Stromleiter verlaufen. Sie ist mit anderen Worten abschnittsweise an dem Feldleiter oder Stromleiter so angeordnet, dass der Fluidkanal parallel zum Feldleiter oder Stromleiter verläuft.

Die Fluidleitung kann ein keramisches Material aufweisen, insbesondere aus einem keramischen Material bestehen. Keramische Materialien sind hitzebeständig, chemisch beständig und elektrisch isolierend und erlauben daher einen Einbau in den Elektromotor, ohne weitere Maßnahmen wie elektrische Isolation zu erfordern.

Die Fluidleitung kann durch eine elektrisch isolierende Materiallage elektrisch von dem Feldleiter oder Stromleiter isoliert sein. Hierfür kommen Isolierpads in Frage. Besonders vorteilhaft ist hierbei wieder, dass der Elektromotor aufgrund seines Aufbaus mit verhältnismäßig geringen Spannungen arbeitet und somit der Aufwand für die elektrische Isolierung vergleichsweise gering gehalten werden kann. Die Dicke der Materiallage sowie eine zur Seite gerichtete zusätzliche Isolierung müssen lediglich an Spannungsdifferenzen im Bereich von beispielsweise 12 V angepasst sein.

Der Elektromotor kann eine Mehrzahl von Leiterplatten aufweisen. Insbesondere kann eine Mehrzahl von separaten Leiterplatten auf eine Kühlplatte aufgebracht sein. Durch Verteilung auf eine Mehrzahl von Leiterplatten kann die verwendete Leistungselektronik modularisiert werden. So kann unter Verwendung einer Vielzahl von gleichartigen Leiterplatten eine große Anzahl von Umrichtern bereitgestellt werden, wodurch die Herstellung in Bezug auf Ausschuss verbessert wird.

Die Leiterplatten können kreis- oder ringsektorförmig ausgestaltet sein. Die Leiterplatten können dadurch in einem Kreis oder Ring angeordnet werden, der die Achse des Elektromotors umschließt. Leiterplatten mit dieser Form lassen sich zu einem Kreis oder Ring zusammensetzen und somit optimal an die Form der elektrischen Maschine angepasst an einem axialen Ende der Maschine anordnen, wobei gleichzeitig eine hohe Modularität erreicht wird. Die Leiterplatten können dadurch platzsparend axial versetzt zum Stator und Rotor angeordnet werden und bilden einen integralen Teil des Elektromotors. Auf diese Weise ist es auch möglich, mehrere Kühlplatten mit Leiterplatten axial versetzt zueinander anzuordnen und so beispielsweise Wechselrichter parallelschalten, die an derselben azimutalen Stelle angeordnet sind.

Bevorzugt ist die Kühlplatte senkrecht zur Achse des Elektromotors angeordnet. Auf diese Weise kann die Kühlplatte mit den Leiterplatten platzsparend an einem axialen Ende der elektrischen Maschine angeordnet werden. Auch eine Mehrzahl von Kühlplatten kann axial versetzt und nahe aneinander angeordnet werden. Weiterhin ist bei einer solche Anordnung ein gleichmäßiger Abstand zwischen Kühlplatte und Leistungselektronik zu den Stäben gegeben, die die Feldleiter bilden, wodurch die Kontaktierung der Stäbe vereinfacht wird.

Besonders vorteilhaft ist es, wenn jeder der Feldleiter mit einer eigenen Phase angesteuert wird. Unter einer Phase wird dabei eine Wechselspannungsversorgung verstanden, die gegenüber allen anderen im Elektromotor verwendeten Phasen um einen von Null verschiedenen Winkel phasenversetzt ist. In diesem Fall ist für jeden der Feldleiter zweckmäßig ein eigener Wechselrichter vorhanden, der nur diesen Feldleiter ansteuert.

Die Wechselrichter können ausgestaltet sein zur Erzeugung einer Wechselspannung mit einer Amplitude von 200 V oder weniger, insbesondere 150 V oder weniger, insbesondere 50 V oder weniger. Die so erzeugte Spannung ist die Spannung, mit der die Feldleiter, also die Statorstäbe beaufschlagt werden. Durch diese vergleichsweise niedrige Spannung wird erst ermöglicht, dass die Komponenten der Wechselrichter sehr nahe zueinander angeordnet werden können. Es können Abstände von etwa 2 mm zwischen den Komponenten wie den Leistungs-Halbleiter-Schaltern verwendet werden, wodurch sich eine hohe Packungsdichte der elektronischen Komponenten ergibt und die Möglichkeit, auf vergleichsweise geringem Raum eine Vielzahl von Wechselrichtern anzuordnen. Dadurch wiederum wird es bei geringem Platzbedarf möglich, eine hohe Zahl von Phasen zu verwenden, insbesondere eine Anzahl von Phasen, die der Zahl der Statorstäbe entspricht. So können bei einer entsprechend hohen Zahl von Statorstäben 48, 72 oder auch 120 Phasen verwendet werden.

Die Begriffe "axial", "radial", "azimutal" beziehen sich dabei auf die Achse des Rotors und damit auf die entsprechende Symmetrieachse des Stators. Dabei beschreibt "axial" eine Richtung parallel zu dieser Achse, "radial" beschreibt eine Richtung orthogonal zur Achse, auf diese zu oder auch von ihr weg, und "azimutal" ist eine Richtung, die in konstantem radialem Abstand zur Achse und bei konstanter Axialposition kreisförmig um die Achse herum gerichtet ist.

Werden die Begriffe "axial", "radial" und "tangential" in Bezug auf eine Fläche verwendet, bspw. eine Querschnittsfläche, beschreiben die Begriffe die Orientierung des Normalenvektors der Fläche, d.h. desjenigen Vektors, der senkrecht auf der betroffenen Fläche steht.

Im Folgenden wird die Erfindung anhand der in den Figuren dargestellten Ausführungsbeispiele näher beschrieben und erläutert. Es zeigen schematisch:
Figur 1 einen Elektromotor mit drei Kühlplatten zur Entwärmung von Leiterplatten in Schrägansicht,
Figur 2 Auf einer Kühlplatte angeordnete Platinen in Frontansicht,
Figur 3 ein Schnittbild der Kühlplatten mit Leiterstäben und Verbindungselementen,
Figur 4 Eine Seitenansicht auf Leiterstäbe und Kühlplatten mit einer Ausführungsform von Fluidkanälen,
Figur 5 ein nicht-perspektivisches Schema für eine serielle Schaltung der Fluidkanäle,
Figur 6 eine weitere Ausführungsform für einen Fluidkanal mit azimutaler Führung.

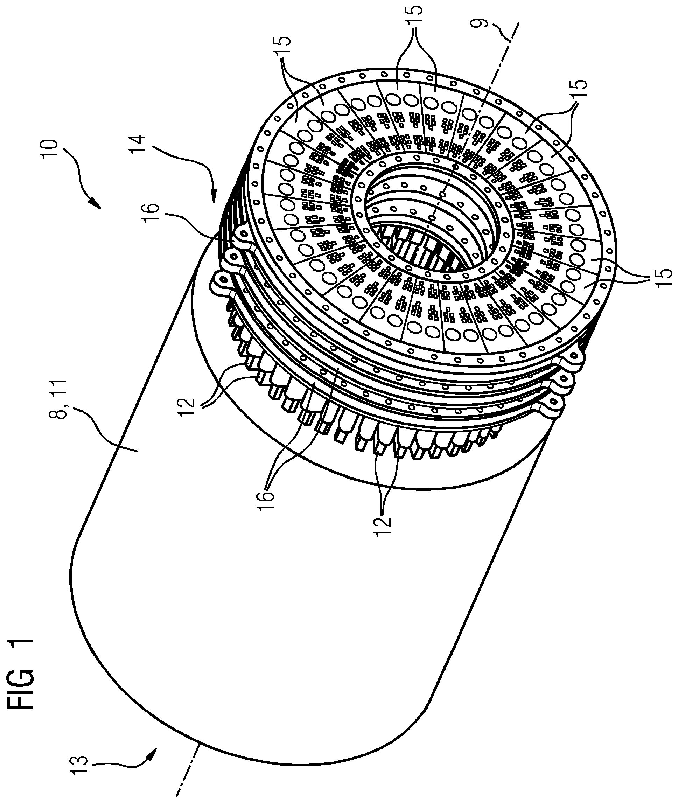

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem dem bestromten Stator 11 wird der Rotor um eine Achse 9 in Drehung versetzt. Der Rotor ist dabei vom Stator 11 durch einen Luftspalt getrennt.

In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule sind zusammen mit anderen Komponenten der Elektronik (Gleichspannungswandler, Gleichrichter) verhältnismäßig eng zusammen auf Platinen 15 angeordnet sein. Die Platinen sind dabei in diesem Beispiel ringsektorförmig und viele einzelne Platinen 15 bilden zusammen eine ringförmige Platinenstruktur aus.

Während in den Beispielen davon ausgegangen wird, dass die Platinen 15 Wechselrichtermodule tragen, ist es auch möglich, dass ein Teil der Platinen 15 Gleichrichter und DC/DC-Wandler tragen.

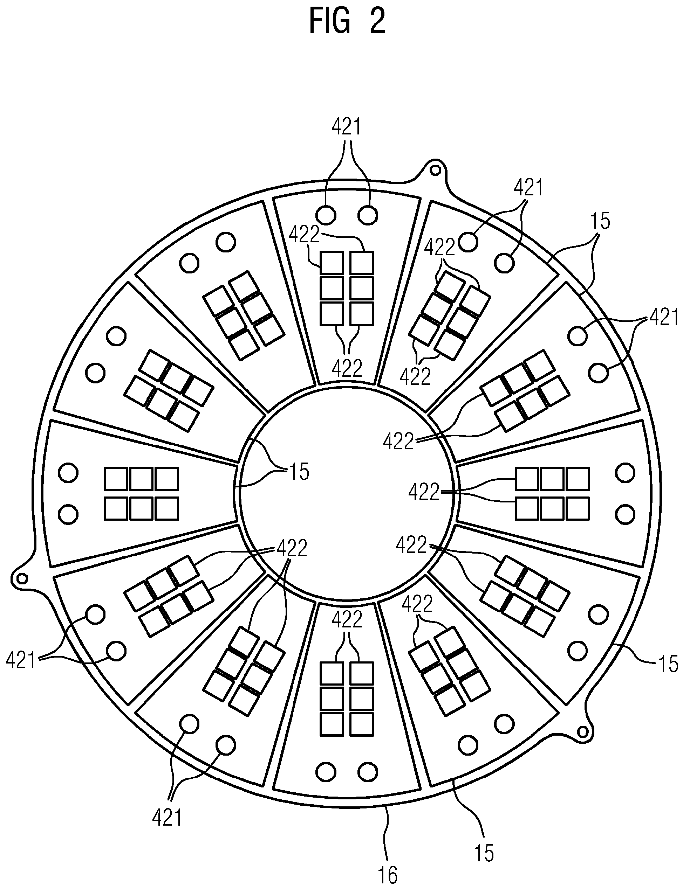

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Platinen 15 hängt von der konkreten Ausgestaltung des Elektromotors 10 ab, insbesondere der Anzahl der Leiterstäbe 12. Jede der Platinen 15 umfasst mehrere Halbleiterschalter 422.

Weiterhin kann ein Teil der Platinen 15 oder alle Platinen 15 in den Figuren nicht dargestellte Treiberschaltungen und andere elektronische Komponenten wie Kondensatoren umfassen. Die Halbleiterschalter 422 sind Leistungshalbleiter wie beispielsweise IGBTs, MOSFETs oder JFETs und können abhängig von der Verschaltung zusätzlich nicht gezeigte Dioden umfassen. Die Halbleiterschalter 422 sind beispielsweise als Halbbrücken verschaltet. Ein nicht gezeigter Kondensator kann beispielsweise einen Zwischenkreiskondensator der Halbbrücken darstellen. Die Halbleiterschalter 422 einer Platine 15 können dabei einer einzelnen Phase zugeordnet sein oder aber mehreren Phasen.

Die Platinen 15 umfassen weiterhin Kontaktstellen 421, an denen die Leiterstäbe 12 angeschlossen sind. Die Platinen 15 werden von scheibenförmigen Kühlplatten 16 getragen, wobei für eine bessere Platzausnutzung die Kühlplatten 16 beidseitig mit Platinen 15 belegt sein können.

Da bei dem Elektromotor 10 verhältnismäßig hohe Ströme in den Leiterstäben nötig sind, sind bevorzugt mehrere Wechselrichter zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Platinen 15 gleichartig an den Kontaktstellen durchdringen oder im Falle der äußersten Kühlplatte 16 zumindest kontaktieren.

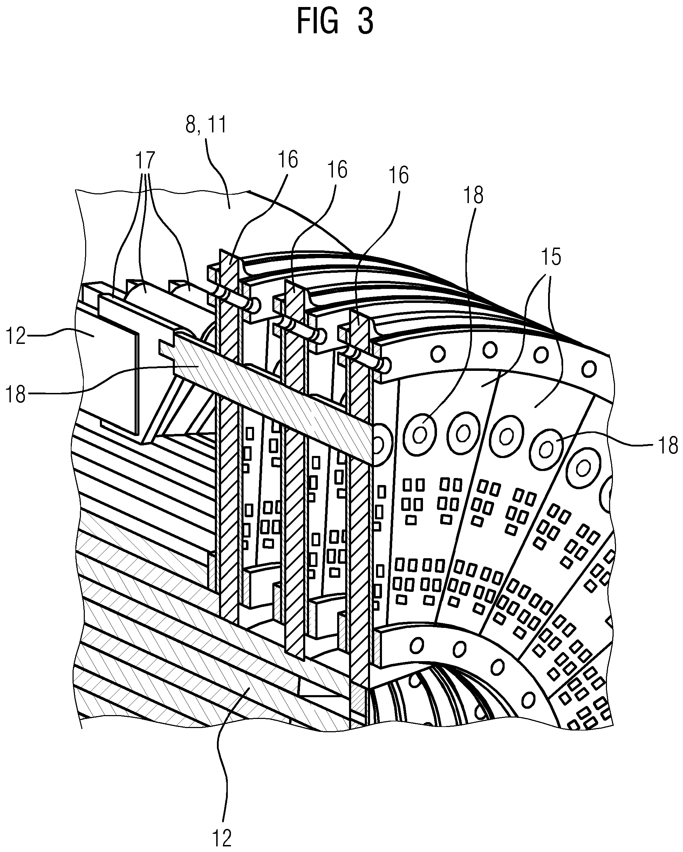

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Schuhe 17 mit den Leiterstäben 12 verbunden. Die Wechselrichter, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit.

Der Stator/Rotor-Block 8 des Elektromotors 10 und die Elektronik auf den Leiterplatten 15 erzeugen Wärme. Die Leiterstäbe 12 und die Verbindungselemente 18 stellen neben der elektrischen Leitung auch eine Wärmebrücke zwischen den beiden Komponenten dar. Besonders auf der Seite der Elektronik ist es aber wichtig, dass ein nicht zu großer zusätzlicher Wärmeeintrag passiert, da die elektronischen Bauelemente eine Temperatur von ca. 80°C nicht lange und weit überschreiten dürfen. Eine verstärkte Kühlung im Bereich der Leiterplatten ist aber aufwendig.

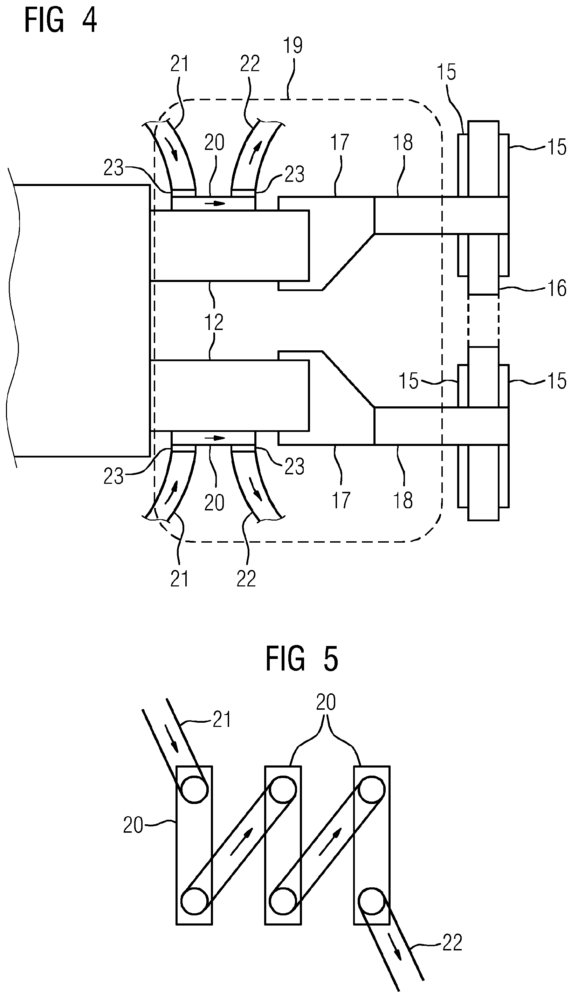

Daher wird vorteilhaft eine Kühlung im Bereich 19 zwischen den Kühlplatten 16 und dem Stator/Rotor-Block 8 vorgesehen. Figur 4 zeigt eine solche Kühlung an einem Leiterstab 12. Bei der gemäß Figur 4 vorgesehenen Kühlung ist ein Fluidkanal 20 an dem Leiterstab 12 so angebracht, dass das Wasser, das hier als Kühlfluid verwendet wird, über eine Strecke im Bereich von einigen cm am Leiterstab 12 entlang geführt wird. Über die Länge dieser Strecke kann die Menge an Wärme eingestellt werden, die vom Leiterstab 12 auf den Fluidkanal 20 und damit das Wasser übergehen kann, da eine längere Strecke eine größere Berührungsfläche bewirkt und diese einen größeren Energiefluss.

Der Fluidkanal 20 kann beispielsweise keramisch sein. In diesem Fall ist er nach Art von keramischen Materialien starr. An den beiden Enden kann daher ein Schlauchanschluss 23 vorhanden sein, in den ein Schlauch zur Weiterführung des Wassers mündet. Dadurch ist für den Fluidkanal ein Zufluss 21 und ein Abfluss 22 realisiert. Diese Schläuche können an anderer Stelle zusammengeführt sein, um einen Kühlkreislauf zu realisieren. An dieser Stelle kann die Wärme über einen Wärmetauscher oder Kühlkörper an die Umgebung abgegeben werden. Es ist möglich, dass die genannten Elemente als Teil des Elektromotors 10 ausgeführt sind. Alternativ ist es auch möglich, dass der Kühlkreislauf am Einbauort des Elektromotors 10 unabhängig vom Elektromotor 10 bereits vorhanden ist und der Elektromotor 10 zusammen mit anderen Geräten an diesen angeschlossen wird.

In alternativen Ausgestaltungen kann der Fluidkanal auch aus anderen Materialien gefertigt sein, auch beispielsweise metallische Materialien. In diesem Fall ist eine elektrische Leitung von dem Leiterstab 12 zu anderen Elementen zu verhindern, beispielsweise durch die Verwendung von Kunststoff-Schläuchen zur Wasserführung.

Da alle Leiterstäbe 12 gleichermaßen erwärmt werden von der Seite des Stator/Rotor-Blocks 8 und gleichermaßen mit den Leiterplatten 15 verbunden sind, ist es zweckmäßig, für jeden der Leiterstäbe 12 einen Fluidkanal 20 vorzusehen. Bei bestimmten Ausgestaltungen des Elektromotors 10 ist die Anzahl der Leiterstäbe 12 aber hoch, beispielsweise 48, 72 oder sogar 120. Im letzteren Fall liegen somit 120 Abflüsse 22 und 120 Zuflüsse 21 vor, die an anderer Stelle angeschlossen oder zusammengeführt werden müssen und für ein Wasserfluss erreicht werden muss, beispielsweise durch ein Pumpsystem.

Daher ist es für bestimmte Ausführungsformen des Elektromotors 10 vorteilhaft, nahe beieinander liegende Fluidkanäle 20 in Gruppen zusammenzufassen und seriell zu verbinden. Eine solche Ausgestaltung ist schematisch in Figur 5 dargestellt. Dabei wird weiterhin davon ausgegangen, dass die Fluidkanäle 20 direkt an den Leiterstäben 12 angeordnet sind. Figur 5 zeigt zur Vereinfachung der Darstellung aber weder die Leiterstäbe 12 noch die eigentlich dreidimensional ringförmige Anordnung der Fluidkanäle 20, sondern stellt die Fluidkanäle 20 vereinfachend nebeneinander dar.

Gemäß Figur 5 sind drei Fluidkanäle 20 zu einer Gruppe zusammengefasst und bezüglich des Wasserflusses in Serie geschaltet. Wendet man diese Gruppierung bei einem Elektromotor 10 mit 120 Leiterstäben 12 für alle Leiterstäbe 12 an, ergeben sich 40 solche Gruppen und daher 40 Zuflüsse 21 und 40 Abflüsse 22, also deutlich weniger als zuvor. Durch die Bildung größerer Gruppen kann der Aufwand bezüglich der Führung des Kühlfluids weiter reduziert werden, solange die Kühlleistung für die jeweils letzten Leiterstäbe 12 in der Serie aus Fluidkanälen ausreichend hoch bleibt.

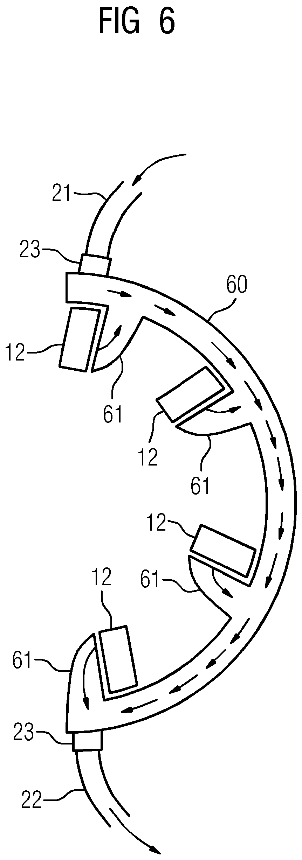

Bei der Ausgestaltung nach Figur 5 verläuft der Wasserfluss immer noch abschnittsweise parallel zur Orientierung der Leiterstäbe 12. In einer alternativen Ausgestaltung, die in Figur 6 dargestellt ist, ist die Orientierung des Wasserflusses um 90° gedreht und das Wasser wird azimutal um den Ring herum geleitet, der durch die Leiterstäbe 12 ausgebildet wird. Figur 6 zeigt den so gebildeten Fluidkanal 60. Der Fluidkanal 60 liegt auf seinem Verlauf auf vier der Leiterstäbe 12 auf. Gemäß Figur 6 entspricht das nicht allen Leiterstäben 12, sondern nur einem Teil der Leiterstäbe 12. Hierbei kann eine ähnliche Abwägung stattfinden wie bei der Gruppenbildung der Figur 5. Je mehr Leiterstäbe 12 der Fluidkanal 60 überstreicht, desto einfacher sind Installation und Anschluss, da die Anzahl der Zuflüsse 21 und Abflüsse 22 sinkt. Dagegen sinkt aber die mögliche Kühlleistung. Weiterhin kann es in diesem Fall bei einem starren Fluidkanal 60 einfacher für die Montage sein, wenn dieser nicht einen vollständigen Ring bildet, also nur einen Teil der Leiterstäbe 12 überstreicht.

Da der Wasserfluss im Fluidkanal 60 in dem Ausführungsbeispiel gemäß Figur 6 nicht entlang der Längserstreckung der Leiterstäbe 12 stattfindet, ist die Strecke, die zur Wärmeabgabe bereitsteht, und damit auch die Fläche, kürzer als bei den Ausführungsformen der Figuren 4 und 5. Um einen ausreichenden Wärmeübergang zu gewährleisten, kann der Fluidkanal 60 zusätzliche oberflächenerweiternde Elemente 61 aufweisen. Diese erscheinen in Figur 6 zahnförmig und sind aus Vollmaterial, um eine gute Wärmeleitung zu ermöglichen. Mit anderen Worten stellen diese kein zusätzliches Volumen für das Kühlfluid dar, sondern erweitern das umgebende Material so, dass eine vergrößerte die Leiterstäbe 12 berührende Oberfläche entsteht.

Bei der Verwendung von Kunststoff-Schläuchen zur Querverbindung zwischen den Fluidkanälen ist eine elektrische Isolation automatisch gegeben. Der Fluidkanal 60 hingegen kann auch als einstückiges Bauelement ausgeführt sein. Ist er dann aus einem isolierenden Material gefertigt, beispielsweise eine Keramik, dann ist eine Isolation zwischen den Leiterstäben 12 weiterhin gegeben. Ist der Fluidkanal 60 hingegen metallisch, dann ist eine Isolierung nötig, um einen Querschluss der Leiterstäbe 12 zu vermeiden. Hierzu können Isolierpads zwischen den Fluidkanal 60 und ggfs. die zusätzlichen Oberflächenelemente 61 und den Leiterstab 12 angeordnet werden.

In den vorangegangenen Ausführungsbeispielen ist der Fluidkanal 20, 60 stets an der Oberfläche der Leiterstäbe 12 entlanggeführt. Bei allen Ausführungsformen kann der Fluidkanal 20, 60 aber ebenso gut an den Verbindungselementen 18 entlanggeführt werden und somit eine Wärmeableitung von der Verbindungselementen 18 vollzogen werden.

Eine weitere Möglichkeit, die in allen Ausführungsbeispielen substituiert werden kann, ist den Fluidkanal 20, 60 an den Schuhen 17 entlangzuführen, mit denen die Verbindungselemente 18 und die Leiterstäbe 12 miteinander verbunden sind. Das ist insofern vorteilhaft, als die Schuhe ohnehin typischerweise ausgestaltet sind, die von ihrer Querschnittsform verschiedenen Leiterstäbe 12 und Verbindungselemente 18 zu verbinden und daher selbst komplexer geformt sind als die Leiterstäbe 12 oder die Verbindungselemente 18. Daher ist es problemlos möglich, eine Reduzierung des stromleitenden Querschnitts, die sich durch Bohrungen ergeben, im Aufbau der Schuhe 17 zu berücksichtigen und auszugleichen. Sowohl die Leiterstäbe 12 als auch die Verbindungselemente 18 können damit wieder gleichförmig aufgebaut sein und damit leichter herzustellen sein.

### Bezugszeichen

- 8: Stator/Rotor-Block
- 9: Motorachse
- 10: Elektromotor
- 11: Stator
- 12: Leiterstäbe
- 13: Stirnseite
- 14: Rückseite
- 15: Platine
- 16: Kühlplatte
- 17: Schuh
- 18: Verbindungselement
- 19: Bereich
- 20, 60: Fluidkanal
- 21: Zufluss
- 22: Abfluss
- 23: Schlauchanschlüsse
- 61: zusätzliches Oberflächenelement
- 421: Kontaktstellen
- 422: Halbleiterschalter

## Patentansprüche

1. Elektromotor (10) mit:
- einem Stator (11) mit einer Mehrzahl von als Stäbe ausgestalteten Feldleitern (12),
- einer Mehrzahl von Wechselrichtern zur Ansteuerung der Feldleiter (12),
wobei
- die Wechselrichter auf einer oder mehreren Leiterplatten (15) angeordnet sind,
- die Leiterplatten (15) auf wenigstens einer Kühlplatte (16) angeordnet sind,
- die Kühlplatte (16) so angeordnet ist, dass die Feldleiter (12) oder mit den Feldleitern (12) elektrisch verbundene Stromleiter (18) mit der Kühlplatte in mechanischer Wirkverbindung stehen,
- wenigstens eine Kühlvorrichtung vorhanden ist, **dadurch gekennzeichnet, dass** die Kühlvorrichtung
entweder
für jeden der Feldleiter (12) und/oder Stromleiter (18) eine Fluidleitung (20, 60) umfasst, die an dem Feldleiter (12) und/oder Stromleiter (18) außen anliegend so geführt ist, dass der Fluidfluss abschnittsweise axial, also parallel zur Orientierung der Leiterstäbe (12) verläuft, wobei ein Bereich (19), in dem die Fluidleitung (20, 60) an dem Feldleiter (12) und/oder Stromleiter (18) außen anliegend geführt ist, axial zwischen einer Kühlplatte (16) und einem axialen Beginn des Stator/Rotor-Blocks (8) liegt,
oder
eine Fluidleitung (20, 60) umfasst, die den Ring, den die Feldleiter (12) oder die Stromleiter (18) ausbilden, an seinem Außenrand oder innenliegend an seinem Innenrand umläuft und an einer radial nach außen oder nach innen weisenden Seite der Feldleiter (12) oder Stromleiter (18) entlanggeführt ist und an einer azimutalen Seite der Feldleiter (12) oder Stromleiter (18) anliegende Oberflächenelemente (61) aufweist.

2. Elektromotor (10) nach Anspruch 1, bei dem die Fluidleitungen (20, 60) Wasserleitungen sind.

3. Elektromotor (10) nach Anspruch 1 oder 2, bei dem eine Pumpe für ein Kühlfluid vorhanden ist.

4. Elektromotor (10) nach einem der vorangehenden Ansprüche, bei dem Feldleiter (12) und Stromleiter (18) mittels eines Schuhs (17) verbunden sind und bei dem die Fluidleitung (20, 60) am Schuh (17) entlanggeführt ist.

5. Elektromotor (10) nach einem der vorangehenden Ansprüche, bei dem die Fluidleitungen (20, 60) für wenigstens zwei der Feldleiter (12) oder Stromleiter (18) miteinander seriell verbunden sind.

6. Elektromotor (10) nach einem der vorangehenden Ansprüche, bei dem die Fluidleitung (20, 60) ein keramisches Material aufweist, insbesondere aus einem keramischen Material besteht.

7. Elektromotor (10) nach einem der vorangehenden Ansprüche, bei dem die Fluidleitung (20, 60) durch eine elektrisch isolierende Materiallage elektrisch von dem Feldleiter (12) oder Stromleiter (18) isoliert ist.

8. Elektromotor (10) nach einem der vorangehenden Ansprüche, bei dem die Leiterplatten (15) kreis- oder ringsektorförmig ausgestaltet sind.

9. Elektromotor (10) nach einem der vorangehenden Ansprüche, bei dem die Kühlplatte (16) senkrecht zur Achse (9) des Elektromotors (10) angeordnet ist.

10. Elektromotor (10) nach einem der vorangehenden Ansprüche, ausgestaltet, jeden der Feldleiter (12) mit einer eigenen Phase anzusteuern.

11. Elektromotor (10) nach einem der vorangehenden Ansprüche, bei der die Wechselrichter ausgestaltet sind zur Erzeugung einer Wechselspannung mit einer Amplitude von 200 V oder weniger, insbesondere 150 V oder weniger, insbesondere 50 V oder weniger.

## Claims

1. Electric motor (10) comprising:
- a stator (11) having a plurality of field conductors (12) designed as bars,
- a plurality of inverters for controlling the field conductors (12),
wherein
- the inverters are arranged on one or more printed circuit boards (15),
- the printed circuit boards (15) are arranged on at least one cooling plate (16),
- the cooling plate (16) is arranged such that the field conductors (12) or current conductors (18) electrically connected to the field conductors (12) are mechanically operatively connected to the cooling plate,
- at least one cooling device is provided, **characterized in that** the cooling device
either
comprises a fluid line (20, 60) for each of the field conductors (12) and/or current conductors (18), the fluid line being guided in a manner bearing against the outside of the field conductor (12) and/or current conductor (18) such that the fluid flow runs axially, i.e. parallel to the orientation of the conductor bars (12), in sections, wherein a region (19), in which the fluid line (20, 60) is guided in a manner bearing against the outside of the field conductor (12) and/or current conductor (18), lies axially between a cooling plate (16) and an axial start of the stator/rotor block (8),
or
comprises a fluid line (20, 60) which encircles the ring, which is formed by the field conductors (12) or the current conductors (18), at its outer edge or on the inside at its inner edge and is guided along a radially outwardly or inwardly facing side of the field conductors (12) or current conductors (18) and has surface elements (61) bearing against an azimuthal side of the field conductors (12) or current conductors (18).

2. Electric motor (10) according to Claim 1, in which the fluid lines (20, 60) are water lines.

3. Electric motor (10) according to Claim 1 or 2, in which a pump for a cooling fluid is provided.

4. Electric motor (10) according to any one of the preceding claims, in which field conductors (12) and current conductors (18) are connected by means of a shoe (17) and in which the fluid line (20, 60) is guided along the shoe (17).

5. Electric motor (10) according to any one of the preceding claims, in which the fluid lines (20, 60) for at least two of the field conductors (12) or current conductors (18) are connected to each other in series.

6. Electric motor (10) according to any one of the preceding claims, in which the fluid line (20, 60) comprises a ceramic material, in particular consists of a ceramic material.

7. Electric motor (10) according to any one of the preceding claims, in which the fluid line (20, 60) is electrically insulated from the field conductor (12) or current conductor (18) by an electrically insulating material layer.

8. Electric motor (10) according to any one of the preceding claims, in which the printed circuit boards (15) are designed in the shape of a sector of a circle or ring.

9. Electric motor (10) according to any one of the preceding claims, in which the cooling plate (16) is arranged perpendicular to the axis (9) of the electric motor (10).

10. Electric motor (10) according to any one of the preceding claims, designed to control each of the field conductors (12) with its own phase.

11. Electric motor (10) according to any one of the preceding claims, in which the inverters are designed to generate an AC voltage with an amplitude of 200 V or less, in particular 150 V or less, in particular 50 V or less.

## Revendications

1. Moteur électrique (10) comprenant :
- un stator (11) comprenant une pluralité de conducteurs de champ (12) réalisés sous forme de barres,
- une pluralité d'onduleurs destinés à exciter les conducteurs de champ (12),
dans lequel
- les onduleur sont disposés sur une ou plusieurs cartes à circuit imprimé (15),
- les cartes à circuit imprimé (15) sont disposées sur au moins une plaque de refroidissement (16),
- la plaque de refroidissement (16) est disposée de telle sorte que les conducteurs de champ (12) ou des conducteurs électriques (18) reliés électriquement aux conducteurs de champ (12) se trouvent en liaison fonctionnelle mécanique avec la plaque de refroidissement,
- au moins un dispositif de refroidissement est prévu, **caractérisé en ce que** le dispositif de refroidissement comprend soit,
pour chacun des conducteurs de champ (12) et/ou des conducteurs électriques (18), une conduite de fluide (20, 60) qui est guidée à l'extérieur du conducteur de champ (12) et/ou du conducteur électrique (18), de telle sorte que le flux de fluide soit axial par section, c'est-à-dire parallèle à l'orientation des barres conductrices (12), une zone (19) dans laquelle la conduite de fluide (20, 60) est placée à l'extérieur du conducteur de champ (12) et/ou du conducteur électrique (18) se situant axialement entre une plaque de refroidissement (16) et un début axial du bloc stator/rotor (8),
soit
une conduite de fluide (20, 60) qui fait le tour de l'anneau formé par les conducteurs de champ (12) ou les conducteurs électriques (18), au niveau de son bord extérieur ou de son bord intérieur, et qui est guidée le long d'un côté tourné radialement vers l'extérieur ou vers l'intérieur des conducteurs de champ (12) ou des conducteurs électriques (18), et présente des éléments de surface (61) adjacents à un côté azimutal des conducteurs de champ (12) ou des conducteurs électriques (18).

2. Moteur électrique (10) selon la revendication 1, dans lequel les conduites de fluide (20, 60) sont des conduites d'eau.

3. Moteur électrique (10) selon la revendication 1 ou 2, dans lequel il est prévu une pompe destinée à un fluide de refroidissement.

4. Moteur électrique (10) selon l'une quelconque des revendications précédentes, dans lequel le conducteur de champ (12) et le conducteur électrique (18) sont reliés au moyen d'un sabot (17) et dans lequel la conduite de fluide (20, 60) est guidée le long du sabot (17).

5. Moteur électrique (10) selon l'une quelconque des revendications précédentes, dans lequel les conduites de fluide (20, 60) sont reliées entre elles en série pour au moins deux des conducteurs de champ (12) ou des conducteurs (18).

6. Moteur électrique (10) selon l'une quelconque des revendications précédentes, dans lequel la conduite de fluide (20, 60) comporte un matériau céramique, et est en particulier constituée d'un matériau céramique.

7. Moteur électrique (10) selon l'une quelconque des revendications précédentes, dans lequel la conduite de fluide (20, 60) est électriquement isolée du conducteur de champ (12) ou du conducteur électrique (18) par une couche de matériau électriquement isolant.

8. Moteur électrique (10) selon l'une quelconque des revendications précédentes, dans lequel les cartes à circuit imprimé (15) sont conçues en forme de secteur circulaire ou annulaire.

9. Moteur électrique (10) selon l'une quelconque des revendications précédentes, dans lequel la plaque de refroidissement (16) est disposée perpendiculairement à l'axe (9) du moteur électrique (10).

10. Moteur électrique (10) selon l'une quelconque des revendications précédentes, conçu pour exciter chacun des conducteurs de champ (12) avec une phase propre.

11. Moteur électrique (10) selon l'une quelconque des revendications précédentes, dans lequel les onduleurs sont conçus pour générer une tension alternative ayant une amplitude de 200 V ou moins, notamment de 150 V ou moins, notamment de 50 V ou moins.
